# EUROPÄISCHE PATENTSCHRIFT

(11) **EP 3 856 592 B1**
(45) Veröffentlichungstag und Bekanntmachung des Hinweises auf die Patenterteilung: **14.06.2023**
(21) Anmeldenummer: 19779807.7
(22) Anmeldetag: 25.09.2019
(51) Int. Cl.: F16D 51/22, F16D 65/22, F16D 66/00, F16D 121/24, F16D 125/40, F16D 125/48, F16D 125/50, F16D 125/52, F16D 125/62, B60T 13/74

(54) **ELEKTRISCHER RADBREMSAKTUATOR MIT VERBESSERTER ENDLAGENERKENNUNG**
ELECTRIC BRAKE ACTUATOR WITH IMPROVED DETECTION OF END POSITION
ACTUATEUR DE FREIN ÉLECTRIQUE AVEC DÉTECTION DE POSITION FINALE AMÉLIORÉE

(30) Priorität: 26.09.2018 DE 102018216509
(43) Veröffentlichungstag der Anmeldung: 04.08.2021
(73) Patentinhaber: Continental Automotive Technologies GmbH, 30165 Hannover (DE)
(72) Erfinder: WINKLER, Thomas, 60488 Frankfurt am Main (DE); BALZ, Jürgen, 60488 Frankfurt am Main (DE)
(74) Vertreter: Continental Corporation
(86) Internationale Anmeldenummer: PCT/EP2019/075814
(87) Internationale Veröffentlichungsnummer: WO 2020/064805

(56) Entgegenhaltungen:
- WO-A1-2014/195329
- DE-A1-102009 038 138

## Beschreibung

Die vorliegende Erfindung betrifft einen elektrischen Seilzugaktuator 3 wie dieser insbesondere für ein elektromotorisch betätigbares Trommelbremsmodul 1 verwendbar ist. Dies kann insbesondere einen elektromechanischen Seilzugbremsaktuator 3 mit Getriebegehäuse 8 einbeziehen, dessen Getriebegehäusewanne mit einem Seilzugauslass radbremsseitig auf einer Außenseite 12 einer Bremshalter 2 bzw. Bremsträger angeordnet ist, und einen Rot-Trans-Wandler umfasst, welcher infolge einer rotatorischen Antriebsdrehbewegung eine translatorische Betätigungsbewegung (B) von Bremsmitteln 6a,b generiert, die auf einer, dem Seilzugaktuator 3 abgewandten Innenseite 13 der Bremshalter 2 im Inneren eines Bremsrotors angeordnet sind, so dass diese eine Betätigungsbewegung in Richtung Bremsrotor ausführen können. Zu Unterbrechung oder Terminierung einer Aktuatorbestromung erfolgt bekanntermaßen eine sogenannte Endlagenerkennung durch Strombeobachtung. Diese ist eine Notwendigkeit für eine ordentliche interne Fahrzeugstatusübergabe, bzw. eine Kompatiblitätsvoraussetzung in Verbindung mit insbesondere robotikgestützten, kommunikativ vernetzten und/oder sonstwie digital geregelten Mehrwertfunktionen. Weil eine automatisierte Feststellbremsfunktion abgesichert sein muss, gelten dieselben Kriterien. Jedoch ist der Rotor und Antriebs-Getriebestrang dieser Radbremsaktuatoren reibungsbehaftet sowie trägheitsbeaufschlagt. Das System muss zudem unter schwierigsten Umgebungsbedingungen zuverlässig arbeiten. Aus wird das ungebremste Einfahren eines Aktuators in eine Löseendanschlagstellung vielfach von Kunden unkomfortabel beurteilt. Daher stellt eine frühzeitige sowie hinreichend feinfühlig erzielte, kostengünstige und prozesssichere Erkennung über das Erreichen einer Löseendstellung stets eine wichtige Randbedingung für einen sicheren und komfortablen Betrieb von elektrischen Radbremsaktuatoren dar. Aus der WO 2014/195329 A1 ist daher ein prinzipiell gattungsgemäßer Seilzug-Trommelbremsaktuator 3 bekannt, wobei eine Antriebsmutter 14 mit Hilfe eines Wälzlagers 15 axial fest sowie drehbar von außen an einer Bremshalter 2 abgestützt ist. Das genannte Lager 15 ermöglicht zudem eine radial zentrierte wie auch kippmomentengeschützte Lagerung für die Antriebsmutter 14. Die Spindelanordnung 9 steht mit der Antriebsmutter 14 in Eingriff, und ist in dem Getriebegehäuse 8 verdrehsicher sowie axial verschiebbar geführt platziert. Um eine zeitnahe elektrische Abschaltung des Seilzugaktuators 3 anhand einer elektrischen Löseendanschlagerkennung zu ermöglichen, ist die Spindelanordnung 9 mit einem Löseendanschlag 20 versehen, der zur Anlage an einem gehäuseseitigen Widerlager 21 dient. Weiterhin ist zwischen Widerlager 21 und Löseendanschlag 20 wenigstens ein Elastoelement 22 angeordnet. Dabei ist das Elastoelement 22 als eine raumsparende Tellerfederanordnung ausgebildet. Dies ermöglicht es einer elektronischen Steuereinheit grundsätzlich, in Verbindung mit der Messung und Beobachtung des Strombedarfs des Motors 7, eine günstige sowie zeitgerecht agile, elektrisch initiierte, Stromabschaltung durchzuführen. Die vorbekannte Konstruktion eines Federelementes erscheint weiterentwicklungswürdig.

Die DE 10 2009 038138 A1 offenbart die Anordnung von Elastoelementen an verschiedenen Stellen des Aktuators.

Die Aufgabe der vorliegenden Erfindung besteht daher darin, unter Vermeidung der Nachteile des Standes der Technik eine verbesserte Endlagenerkennung bei vereinfachter Herstellung zu ermöglichen.

Die Aufgabe wird erfindungsgemäß in besonders innovativer Art und Weise erstmals dadurch gelöst, dass das Elastoelement 22 mit mindestens 2 Tellerfedern zur Ausbildung einer gespreizten Kraft-Weg-Federkennlinie aus mehreren Federkennlinienteilstücken segmentiert zusammengesetzt vorgesehen ist. Der modular segmentiert gewechselte Zusammenbau ermöglicht eine besonders zweckmäßige Anpassung des Federkennlinienverlaufs an die Anforderungen der jeweiligen Aktuatorapplikation, so dass erfindungsgemäß erstmals eine deutlich vereinfachte Großserienvariation einschließlich nichtlinearer Kennlinienspreizung angeboten wird. Demzufolge wir der jeweiligen elektronischen Steuereinheit ECU eine besonders robust ausgelegte elektrische Endanschlagerkennung im Rahmen einer Motorstrombeobachtung ermöglicht. Positiv hervorzuheben ist auch die besonders raumsparende und dabei zweckmäßige Integration des Elastoelements in der Nachbarschaft des Rot-Trans-Wandlers. Ein Zusammenbau aus 3 oder mehr Tellerfedern ist bei Sonderfällen möglich.

Vorteilhafterweise umfasst eine erfindungsgemäß zusammengesetzte Kraft-Weg-Federkennlinie eines modular zusammengesetzten Elastoelements zumindest ein degressiv gekrümmtes Federkennlinienteilstück A-B sowie ein daran angeschlossenes, progressiv gekrümmtes Federkennlinienteilstück C-D. Demzufolge wird zunächst ein vergleichsweise milder, also sanfter, gedämpfter Einlauf in den Endanschlag ermöglicht, welcher ausreichend Gelegenheit zur Terminierung der Stromabschaltung bietet, und wobei der trägheitsbedingt graduell weiterlaufende Getriebestrang gewissermaßen danach spätestens in dem progressiv verlaufenden Kraft-Weg-Kennlinienstück sicher abgebremst werden kann, um einen harten Endanschlag zuverlässig zu vermeiden.

Die regelungstechnische Robustheit des Systems wird darüber hinaus zielgerichtet erhöht, indem die Kraft-Weg-Federkennlinie des modular zusammengesetzten Elastoelements zusätzlich über wenigstens ein weitgehend horizontal gerichtetes Federkennlinienteilstück B-C verfügt. Im Rahmen von dieser Ausführungsform ist das horizontal gerichtete Federkennlinienteilstück B-C zwischen dem degressiv gekrümmten Federkennlinienteilstück A-B und dem progressiv gekrümmten Federkennlinienteilstück C-D eingefügt vorgesehen.

Ein konstruktiv bei mäßiger Bauteilanzahl bevorzugtes Ausführungsbeispiel, welches zudem die Vorteile einer Gleichteilstrategie einschließt, sieht vor, dass das Elastoelement als geschichtete Tellerfedersäule vorliegt, die wenigstens eine Einzeltellerfeder in Verbindung mit einem, in Relation zu der Einzeltellerfeder wechselsinnig arrangierten, Tellerfederpaket einschließt, und wobei das Tellerfederpaket mindestens zwei gleichsinnig aufgeschichtete Tellerfedern umfasst. Dabei darf das Tellerfederpaket über zwei identisch ausgebildete Tellerfedern mit degressiver Federkennlinie verfügen, und wobei die Blockkraft des Tellerfederpakets kleiner als die Blockkraft des Elastoelements ausgelegt ist. Weiterhin sieht die bevorzugte Ausgestaltung vor, dass die Einzeltellerfeder über eine lineare oder progressive Kraft-Weg-Federkennlinie verfügt, und wobei die Blockkraft der Einzeltellerfeder der Blockkraft des Elastoelements (22) entspricht. Mit anderen Worten ist die Einzeltellerfeder als Getriebebremse zielgerichtet so dimensioniert, dass diese gewissermaßen nachgeordnet greift, nachdem das vorgeschaltete Tellerfederpaket bereits auf Blocklänge deformiert worden ist. In Variation ist es möglich, dass das Tellerfederpaket über zwei identisch ausgebildete Tellerfedern mit linearer oder progressiver Kraft-Weg-Federkennlinie verfügt. In dieser Alternativkonstellation entspricht die Blockkraft des Tellerfederpakets der Blockkraft des Elastoelements. Demgegenüber kann die Einzeltellerfeder über eine degressive oder lineare Kraft-Weg-Federkennlinie bei reduzierter Blockkraft verfügen. Die Kraft-Weg-Federkennlinie kann zudem einen Steigungswendepunkt G wie auch verschiedene Teilabschnitte von konstanter bzw. linearer Steigung umfassen. Zur Rationalisierung ergeht die Empfehlung, sämtliche Tellerfedern aus demselben Stahlblechwerkstoff herzustellen.

In der Zeichnung zeigt, teils schematisch und/oder in verschiedenem Maßstab, Schnitt, Ansicht oder Perspektive im Einklang mit der Figurenbeschreibung:
Fig. 1 ein vorveröffentlichtes Trommelbremsmodul umfassend eine vorbekannte Mutter-Spindel-Lagerung in einem Getriebegehäuse, gemäß WO 2014/1195329 A1, nur zwecks Erläuterung,
Fig. 2 ein vergrößerter Teil der Fig. 1, und
Fig. 3 prinziphaft eine bevorzugte Ausführungsform eines erfindungsgemäß aufgebauten Elastoelements mit gespreizter Kraft-Weg-Federkennlinie zwecks verbessert aufgelöster Endanschlagerkennung, in teilweise stark vergrößertem Teilschnitt, und
Fig. 4 eine nichtlineare Kraft-Weg-Federkennlinie einer bevorzugten Ausführungsform eines erfindungsgemäß wechselweise zusammengesetzten Elastoelements.

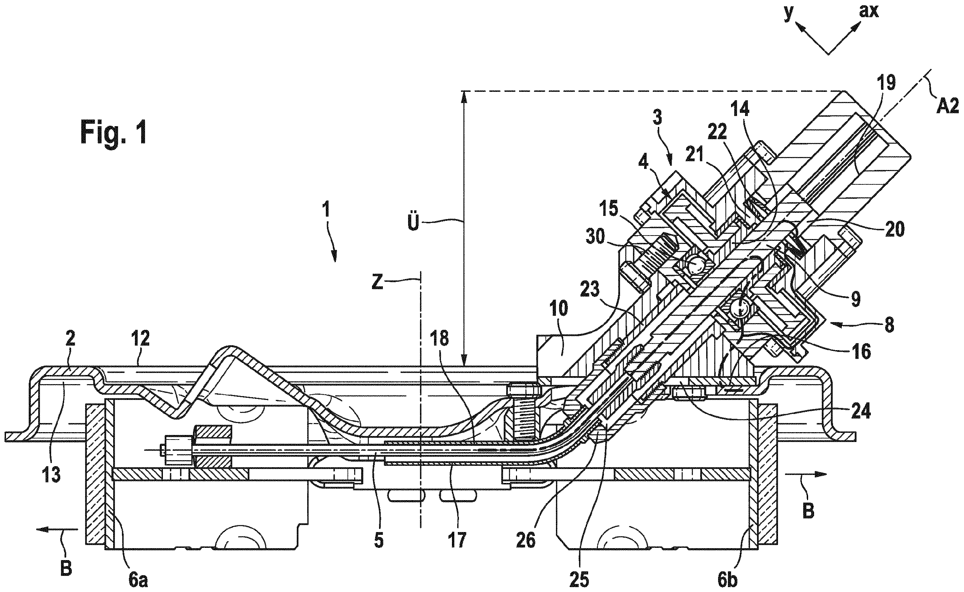

Ein bekanntes, elektromotorisch betätigbares, Trommelbremsmodul 1 zur Anordnung an Achsbauteilen eines Kraftfahrzeugs umfasst gemäß Fig. 1 einen Bremshalter 2 mit daran gelagerten Bremsmitteln 6a,b, die in Kooperation mit einem nicht gezeichneten Bremsrotor stehen. Auf einer gegenüber liegenden Seite des Bremshalter 2 ist ein elektromotorisch angetriebener Seilzugaktuator 3 befestigt, der über ein Getriebe 4 und einen nachgeschalteten Seilzug 5 derart an einer oder mehreren der Bremsmitteln 6a,b angreift, dass diese Bremsmittel(n) 6a,b eine Betätigungsbewegung B in Richtung auf den Bremsrotor ausführen können, um eine Betriebs- und/oder Feststellbremsfunktion auszuführen. Zwischen den Bremsmitteln 6a,b kann eine Abstützvorrichtung 11 vorgesehen sein.

Das Getriebe 4 umfasst ein Getriebegehäuse 8, das den Motor 7 aufnimmt oder den Motor 7 zumindest trägt. Der Motor 7 konsumiert Gleichspannung ist mechanisch oder elektronisch kommutiert, und von einem preiswert verfügbaren Standardtyp.

Die Fig. 1 verdeutlicht allenfalls mittelbar, dass eine Achse A1 des Motors 7 im Abstand x sowie parallel zu einer Achse A2 einer Spindelanordnung 9 arrangiert ist. Der Adapter 10 ist zwischen Seilzugaktuator 3 und Bremshalter 2 eingefügt.

Der Antriebs- und Getriebestrang verfügt über ein mehrstufiges, insbesondere 2-stufiges Zahnrad- und/oder Riemen- und/oder Schneckengetriebe und/oder Planetengetriebe (Mischkombinationen vorgenannter Typen sind möglich und erwünscht) als Momentenwandler vom Untersetzungstyp. Dabei ermöglicht ein vorzugsweise zweistufiges Rädergetriebe ein Untersetzungsverhältnis in einem Bereich zwischen etwa 7:1 bis 25:1. Wenn das nachgeschaltete Hebelgetriebe im Bereich der Bremsmitteln 6a,b eine Untersetzung von etwa 5:1 ermöglicht, wird ein Untersetzungsverhältnis von etwa 125:1 erzielt. Hinzu tritt eine zusätzliche Untersetzungswirkung des Rot-Trans-Wandlers, was eine Gesamtuntersetzungswirkung über den gesamten Antriebsstrang in einer Größenordnung von mindestens etwa 250:1 ermöglicht. Durch diesen Getriebestrang sind die Kosten- und Leistungsanforderungen an den Motor 7 zusätzlich deutlich abgesenkt.

Die Seilzugaktuatorkonstruktion ist im Einzelnen aus Fig. 1 ersichtlich. Der Seilzugaktuator 3 ist dabei als gesondert handhabbare Baueinheit auf einer Seite 12 der Bremshalter 2 vorgesehen. Es ist möglich, den Rot-Trans-Wandler als Spindelanordnung 9 in das Getriebegehäuse 8 zu integrieren und in dem Getriebegehäuse 8 verdrehsicher, leichtgängig sowie spielfrei zu führen. Eine Abwandlung der Gestaltung besteht darin, dass der Rot-Trans-Wandler außerhalb vom Getriebegehäuse 8 innerhalb des Bremsrotors vorgesehen ist, und eine Spindelanordnung 9 oder einen schwenkbaren Hebel beinhaltet, der an der Bremshalter 2 gelagert ist. Die Befestigung ist vorzugsweise lösbar angeflanscht vorgesehen.

Wie aus Fig. 1 teilweise hervorgeht, ist das Getriebegehäuse 8 mehrstückig gebaut. Das Getriebegehäuse 8 nimmt eine Mehrzahl von Getriebebauelementen auf, die primär zur Drehmomentwandlung (geringes Eingangsdrehmoment, hohes Ausgangsdrehmoment) dienen, und auch eine stromlose Feststellbremsfunktion mittels Selbsthemmung ermöglichen können. Achsen A1, A2 von Motor- und Getriebewellen sind parallel, in dem Abstand X versetzt, zueinander vorgesehen. Zumindest bestimmte Getriebebauelemente können zumindest teilweise kostengünstigen Kunststoffwerkstoff aufweisen. Bevorzugt ist stromlose Selbsthemmung in dem Rot-Trans-Wandler (Spindelanordnung 9) vorgesehen, so dass der Rest vom Getriebestrang prinzipiell von den Zuspannkräften weitestgehend entlastet ist.

Gemäß Fig. 1 nimmt das Getriebegehäuse 8 zumindest teilweise zusätzlich eine Rot-Trans-Wandlerbaugruppe mit der Spindelanordnung 9 zur Wandlung der rotatorischen Antriebsdrehbewegung in eine translatorische Abtriebsbewegung auf. Folglich ist der Wandler zur raumsparenden Integration in die bekannten Trommelbremsanordnungen kostengünstig und platzsparend (verdichtet) in einer Schnittstelle zwischen Seilzugaktuator 3 und Bremshalter 2 eingefügt und dennoch im Getriebegehäuse geführt, so dass für eine Umrüstung auf die elektromechanische Seilzugaktuatorik irgendwelche Änderungen an der Trommelbremsmechanik, insbesondere an dem Hebelgetriebe oder an der Bremshalter 2, gar nicht notwendig sind.

Für diejenigen Applikationen mit einer besonders effektiven, reibungsreduzierten, elektromechanischen Bremsfunktion befinden sich zwischen einer prinzipiell metallisch ausgebildeten Antriebsmutter 14 und einer prinzipiell metallisch ausgebildeten Spindelanordnung 9 mehrere Wälzkörper. Eine Parkbremsfunktion wird bei den "stromlos gelösten" Varianten durch eine gesonderte Feststell-, Verriegelungs- oder Blockiervorrichtung ermöglicht. Eine besonders vorteilhafte Vorrichtung ist beispielsweise aus der DE 19826785 A1 bekannt, auf deren Offenbarungsgehalt in Hinblick auf die Prinzipien dieser Festellvorrichtung in vollem Umfang hier hingewiesen wird.

Der Kraftfluss der Bremsbetätigungskraft ist folgendermaßen. Ausgehend von Bremsmittel 6a,b und Seilzug 5 gelangt die erzeugte Zugkraft über Spindelanordnung 9 in die Antriebsmutter 14. Für eine direkte, starre Bremskraftabstützung an einer planen Auflagefläche 16 kann eine metallische Distanzbuchse dienen. Diese stützt einen Außenring von dem Lager 15 auf der Bremshalter 2 ab. Die Distanzbuchse ist bevorzugt als Einlegeteil in das Getriebegehäuse 8 aus Kunststoffwerkstoff eingeformt. Das Lager 15 ist mit Vorteil als reibungsarmes Wälzlager (Schräg-, Schulter-, Axial- oder Rillenkugellager) ausgelegt. Das beschriebene Lager 15 ermöglicht auch eine radial gerichtete Lagerung für die Antriebsmutter 14. In Abwandlung der Gestaltung, kann für eine besonders präzise, kippresistente Abstützung der Antriebsmutter 14 jeweils ein antriebsseitiges und zusätzlich ein abtriebsseitiges Lager vorgesehen sein, ohne die Erfindung zu verlassen.

Die Spindelanordnung 9 steht mit der Antriebsmutter 14 in Eingriff, und ist in dem Getriebegehäuse 8 verdrehsicher sowie axial verschiebbar geführt platziert. Zu diesem Zweck weist das Getriebegehäuse 8 eine prismatische oder zylindrische Führung 19 mit wenigstens einem oder mehreren angepassten Kulissenelementen auf, welche als formschlüssig wirksames Mittel zur Führungs- und Verdrehsicherungsfunktion beitragen. Um eine günstige elektrische Abschaltung vom Seilzugaktuator 3 zu ermöglichen, ist die Spindelanordnung 9 mit einem Löseendanschlag 20 versehen, der zur Anlage an einem gehäuseseitigen Widerlager 21 dient. Weiterhin ist zwischen Widerlager 21 und Löseendanschlag 20 wenigstens ein Elastoelement 22 vorgesehen. Das Elastoelement 22 ist bevorzugt als Tellerfederanordnung ausgebildet, die eine steife Federkennlinie bei geringem Platzbedarf ermöglicht. Dies ermöglicht in Verbindung mit Messung und Beobachtung vom Strombedarf des Motors 7 eine günstige und frühzeitige automatische elektrische Abschaltung durch die Steuereinheit. Um konstant eine reproduzierbare Abschaltung zu ermöglichen, erfordert das System möglichst konstante Betriebsbedingungen (Seilführungsreibung) .

Die verdichtete Seilzugaktuatorbauweise beinhaltet, dass die Spindelanordnung 9 zumindest teilweise in einem Stutzen 23 vom Getriebegehäuse 8 verschiebbar geführt aufgenommen ist. Der Stutzen 23 ist in Relation zu einer Durchgangsöffnung 24 der Bremshalter 2 zentriert angeordnet. Vorzugsweise durchgreift der Stutzen 23 die Durchgangsöffnung 24 derart, dass zumindest ein Teil von der Spindelanordnung 9 in das Innere von dem Bremsrotor verschoben werden kann. Dies dient auch einer automatischen Zentrierung vom Seilzug 5.

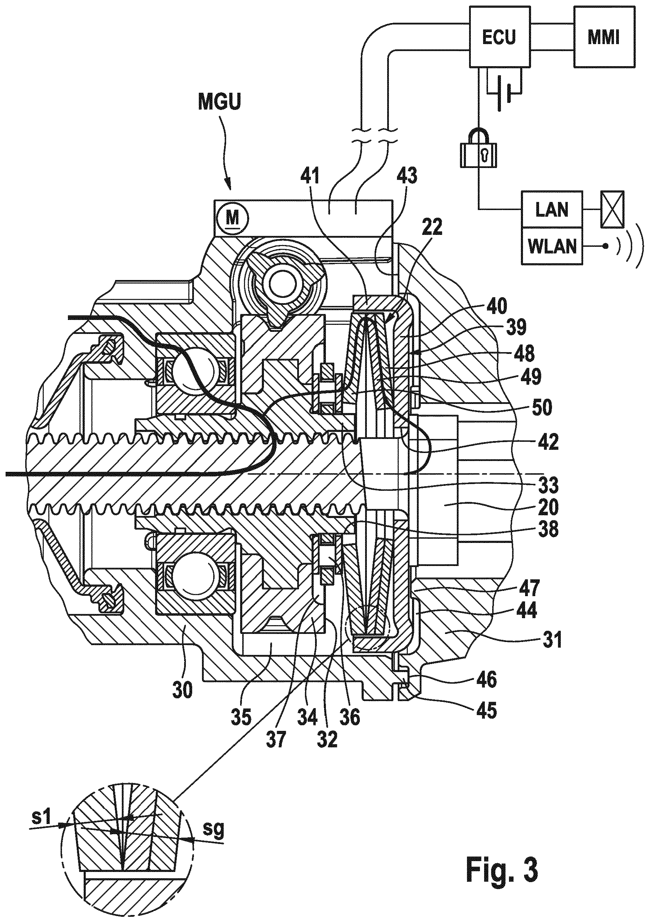

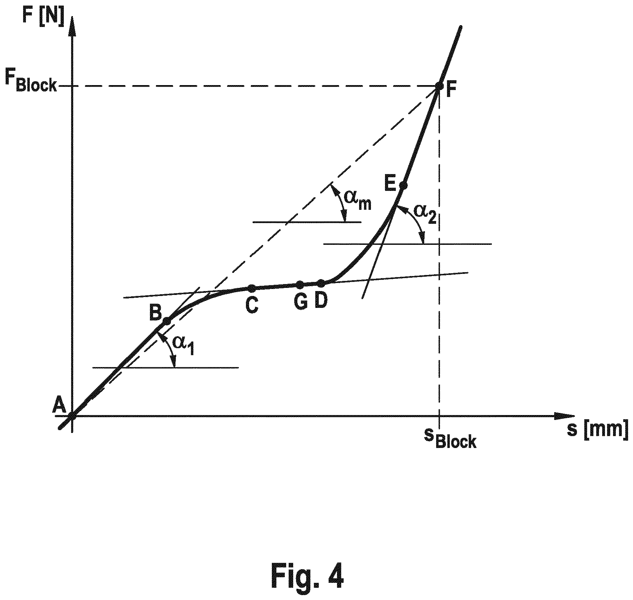

Dies vorausgeschickt wird nachstehend auf die Besonderheiten der vorliegenden Erfindung anhand von einer bevorzugten Ausführungsform gemäß Fig. 3 eingegangen, und wobei die Besonderheiten einer Kraft-Weg-Federkennlinie für eine beispielhafte Ausführungsform aus Fig. 4 hervorgeht.

Eine elektrische Motor-Getriebe-Einheit ist generell in eine periphere elektrische Kraftfahrzeugbordnetzarchitektur, sowie Datenringbus, eingebunden, und verfügt über mindestens eine zugewiesene elektronische Steuereinheit ECU inclusive abgesicherter externer Datennetzwerkschnittstelle, wie auch über wenigstens eine Mensch-Maschine Schnittstelle MMI (bspw. Display, Hardwareschalter und/oder Pedalerie) zwecks manueller Feststellbremsaktuatoransteuerung (Betätigen; Lösen).

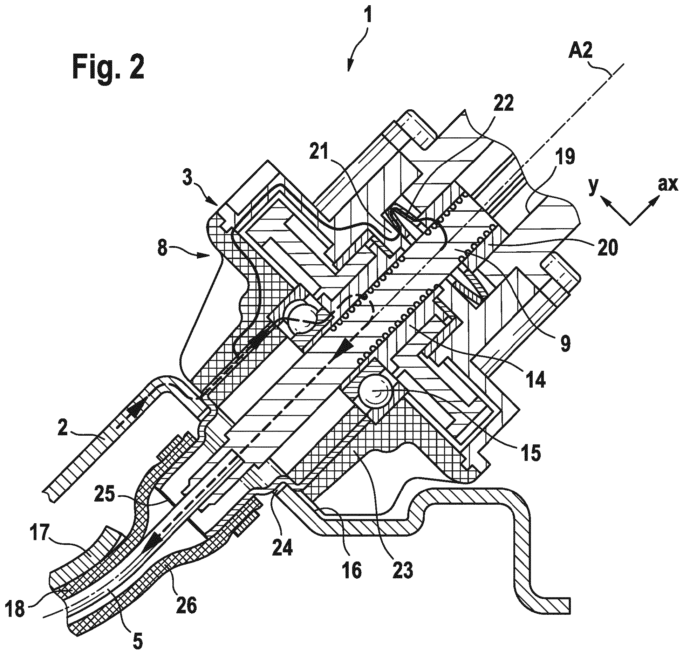

Im Vergleich mit bekannten Aggegaten wie gemäß Fig. 1 und Fig. 2 liegt in Bezug auf das Elastoelement 22 eine gänzlich neuartige Konfiguration vor, und wobei zudem auf ein Widerlager 21 wie auch auf ein zwischendrin eingefügtes Getriebegehäusezwischenteil verzichtet wird. Erfindungsgemäß genügt eine Getriebegehäusewanne 30 und ein Getriebegehäusedeckel 31.

Denn das Elastoelement 22 ist lateral seitlich neben der Antriebsmutter 14 zwischen einer Flanke 32 der Antriebsmutter 14 und dem Löseendanschlag 20 der Spindelanordnung 9 eingespannt vorgesehen. Dabei ist die Antriebsmutter 14 gewissermaßen als Verbundbauteil ausgebildet, welches in seinem Zentrum über die Nabe 33 mit dem Muttergewinde verfügt, und wobei die Antriebsmutter 14 zudem in drehfestem Verbund mit einem außenverzahnten Getrieberad 34 vorliegt, welches rotatorisch mit dem Aktuatorgetriebestrang kämmt. Diese nachbarschaftlich nebeneinander arrangierte Anordnung ermöglicht eine besonders verdichtete Konfiguration sowie gemeinsame Montage, weil ermöglicht ist, dass das Elastoelement 22 ökonomischerweise gemeinsam mit der Antriebsmutter 14 in einer gemeinsamen Vertiefung 35 von der Getriebegehäusewanne 30 versenkt aufgenommen ist.

Das Elastoelement 22 darf durchaus unmittelbar, also direkt, zwischen spindelseitigem Löseendanschlag 20 und Antriebsmutter 14 eingespannt sein. Jedoch ist es bei Vermeidung von Direktauflage unter entsprechender Erhöhung der Bauteilanzahl genauso möglich, dass das Elastoelement 22 unter Vermittlung von wenigstens einem weiteren Bauteil, also mittelbar, zwischen Löseendanschlag 20 und Antriebsmutter 14 eingespannt ist. In den Kraftfluss dieser mittelbaren Abstützung darf ein Axiallager 36 eingebunden sein, das seinerseits an der Flanke 32 der Antriebsmutter 14 abgestützt ist. Eine besonders bauraumsparende Gestaltung im Sinne einer weiterhin deutlich verkürzten Baulänge wird erzielt, wenn das Axiallager 36 in einer seitlich-stirnseitig arrangierten Ausnehmung 37, mit integriertem Lagersitz 38 in der Nabe 33 der Antriebsmutter 14 versenkt aufgenommen ist. Andererseits ist das Elastoelement 22 mittelbar über einen Federteller 39 aus kaltumgeformtem Stahlblech am Löseendanschlag 20 der Spindelanordnung 9 abgestützt. Insbesondere zwecks gegenseitiger montagefreundlicher Zentrierung, auch in Hinblick auf die jeweils angrenzenden Schnittstellen peripherer Bauteile kann es vorteilhaft sein, wenn der Federteller 39 napförmig mit Boden 40, Wandung 41, sowie mit einer zentralen Durchgangsbohrung 42 als Durchlass für die axial translatorisch relativverschiebbar sowie drehfest im Getriebegehäuse 8 gelagert angeordnete Spindelanordnung 9 ausgebildet ist. Als stabile Auflage empfiehlt sich ein eingezogener, zumindest geringfügig eingedrückter, kaltverfestigter Boden 40 in Verbindung mit definierten Anschlagnocken 47 an einer Stirnseite 43 des Getriebegehäusedeckels 31. Auch in diesem Zusammenhang bietet sich beispielhaft die besonders verdichtete Ausgestaltung an, indem der Federteller 39 zwecks seiner raumsparenden Integration zumindest teilweise in der stirnseitigen Freisparung 44 des Getriebegehäusedeckels 31 versenkt gelagert ist, so dass sich im Ergebnis die integrale Aufnahme ergibt. Insbesondere wenn das Elastoelement 22 zusammengesetzt ist, und ggf. Elastomerwerkstoff beinhaltet, bzw. aus mehreren Einzelteilen wie insbesondere Tellerfedern 48, 49, 50 geschichtet vorliegt, bietet es sich vorteilhafterweise an, wenn diese mehrteilige Anordnung durch Vorfixierung am Federteller 39 sicher handhabbar ist. Dabei ist das Elastoelement 22 durch den Federteller 39 gekapselt, indem die Wandung 41 des Federtellers 39 einen Umfang des Elastoelements 22 zumindest teilweise von radial außen umgreift. Der Federteller 39 darf über einen dornartigen Zentriervorsprung verfügen, welcher das Elastoelement 22, quasi als Knickschutz, zumindest teilweise von innen durchgreift. In weiterer Ausgestaltung des Modul- bzw. Vormontagegedankens bildet das Elastoelement 22, und/oder Axiallager 36 und/oder Federteller 39 ggf. gemeinsam mit der Antriebsmutter 14 einen Montagebestandteil der Spindelanordnung 9 derart, dass diese Bauteile gemeinsam mit der Gewindespindel eine beliebig untereinander verknüpft zusammengefügte Baugruppe ausbilden können, und wobei diese Baugruppe beziehungsweise Komponente als gebündelt zusammengefügte Montageeinheit in die Getriebegehäusewanne 30 einfügbar ist.

Das Aktuatorgetriebegehäuse ist prinzipiell aus Kunststoffwerkstoff zweigeteilt vorgefertigt. Dabei sieht das Gehäusearrangement vor, dass sich eine Teilungsebene zwischen Getriebegehäusewanne 30 und Getriebegehäusedeckel 31 im Bereich der Antriebsmutter 14 mit Elastoelement 22 so erstreckt, dass die Getriebebauteile wie insbesondere die Spindelanordnung 9 incl. Seilzug 5 und Antriebsmutter 14 einfach in die Vertiefung 35 der Getriebegehäusewanne 30 eingelegt werden können, und wobei die beiden Getriebegehäuseteile 30,31 nach Einfügung sämtlicher Komponenten unlösbar miteinander hermetisch verschweißt werden. In diesem Zusammenhang können die Getriebegehäuseteile zur hermetisch dichten, labyrinthartig augeprägten wie auch im Übrigen robusten Gestaltung über einen rahmenartig ausgeformten, stirnseitigen Ringvorsprung verfügen, und wobei die Getriebegehäusewanne 30 dabei stirnseitig über einen Ringwulstvorsprung 45 verfügt, der in eine gegenüberliegend stirnseitig arrangierte Ringnutvertiefung 46 des Getriebegehäusedeckels 31 eingeschweißt sein kann. Zu diesem Zweck bieten sich insbesondere die Ultraschallschweißverfahren unter Einbezug von kohlenstofffaserverstärkten thermisch stabilisierten spritzgießbaren thermoplastischen Getriebegehäusekunststoffwerkstoffe zur Weiterverwendung in der Automobilindustrie an.

Wie die Fig. 3 zeigt, ist das Elastoelement 22 aus 3 Tellerfedern 48, 49,50 modular zusammengesetzt, und die Fig. 4 verdeutlicht, dass erfindungsgemäß damit eine nichtlinear aufgespreizte Kraft-Weg-Federkennlinie definiert ist. Dabei umfasst die Kraft-Weg-Federkennlinie des modular zusammengesetzten Elastoelementes 22 zumindest ein degressiv gekrümmtes Federkennlinienteilstück A-B sowie ein progressiv gekrümmtes Federkennlinienteilstück C-D. Als zusätzliche Spreizungsmaßnahme kann es vorgsehen sein, dass die Kraft-Weg-Federkennlinie des modular zusammengesetzten Elastoelementes zusätzlich über wenigstens ein weitgehend horizontal gerichtetes Federkennlinienteilstück B-C verfügt. Dies horizontal gerichtete Federkennlinienteilstück B-C ist gemäß Fig. 4 zwischen dem degressiv gekrümmten Federkennlinienteilstück A-B und dem progressiv gekrümmten Federkennlinienteilstück C-D eingefügt.

Die konstruktive Gestaltung des Elastoelementes 22 ist so, dass es als geschichtete Tellerfedersäule vorliegt, welche wenigstens eine Einzeltellerfeder gemeinsam mit einem, in Relation zu der Einzeltellerfeder wechselsinnig arrangierten, Tellerfederpaket einschließt, und wobei das Tellerfederpaket mindestens zwei gleichsinnig aufgeschichtete Tellerfedern umfasst. Weiterhin verfügt das exemplarisch ausgestaltete Tellerfederpaket in Fig. 3 über zwei identisch ausgebildete Tellerfedern mit degressiver Federkennlinie, und wobei die Blockkraft des Tellerfederpakets kleiner als die Blockkraft des Elastoelementes 22 ausgelegt ist. Mit anderen Worten geht mit wachsender Kraft zuerst das Tellerfederpaket auf Blocklänge (stellt die elastische Deformation ein) bevor die Einzeltellerfeder bei entsprechend gesteigerter Kraft die Blocklänge erreicht.

Generell verfügt die Einzeltellerfeder über eine linear oder progressiv ausgelegte Kraft-Weg-Federkennlinie, und wobei die Blockkraft der Einzeltellerfeder mit einer maximal ausgelegten Blockkraft des Elastoelements 22 übereinstimmt. Demzufolge dient die Einzeltellerfeder quasi als finale Anschlagbremse, welche sich mit nach fortgeschrittenem Kraftanstieg weiterhin elastisch verformen kann, obwohl das Tellerfederpaket bereits durch Erreichen seiner Blocklänge seine maximale Arbeitsfähigkeit erreicht hat.

Eine entsprechend umgekehrte Abstimmung zwischen den Auslegungsgrößen von Federpaket und Einzeltellerfeder ist gemeinsam mit einer feinfühlig und präzise anhand verkürzter Intervallzeiten von beispielsweise etwa 5 ms digital getakteter Elektromotorstromabtastung durch die ECU ganz prinzipiell denkbar. Dazu kann das Tellerfederpaket beispielhaft über zwei identisch ausgebildete Tellerfedern mit einer linearer oder progressiv ausgelegten Kraft-Weg-Federkennlinie verfügen, und wobei die Einzeltellerfeder über eine degressiv ausgelegte Kraft-Weg-Federkennlinie verfügt. Dazu passend kann die Blockkraft des Tellerfederpakets mit einer maximal ausgelegten Blockkraft des Elastoelements 22 übereinstimmen.

Wie die bevorzugte Ausführungsform gemäß Fig. 3 erkennen lässt, verfügen alle Tellerfedern des Elastoelementes konstruktiv über identische Außendurchmesser, und wobei die Einzeltellerfeder im Vergleich mit den Tellerfedern des Federpakets über einen vergrößerten Innendurchmesser verfügt. Eine Wandstärke einer Einzeltellerfeder stimmt im Wesentlichen etwa mit einer summarischen Wandstärke des Tellerfederpaketes des Elastoelementes überein.

Der Werkstoff für das Elastoelement 22 ist bevorzugt Federstahl. Dabei ist es in einer Rabattierung wie auch logistisch von Vorteil, wenn alle Tellerfedern des Elastoelementes 22 aus identischem Federstahlblechwerkstoff ausgebildet sind.

### Bezugszeichenliste:

1 Trommelbremsmodul
2 Bremshalter
3 Seilzugaktuator
4 Getriebe
5 Seilzug
6 Bremsmitteln
7 Motor
8 Getriebegehäuse
9 Spindelanordnung
10 Adapter
11 Abstützvorrichtung
12 Außenseite
13 Innenseite
14 Antriebsmutter
15 Lager
16 Auflagefläche
17 Führung
18 Hülle
19 Führung
20 Löseendanschlag
21 Widerlager
22 Elastoelement
23 Stutzen
24 Durchgangsöffnung
25 Austrittsöffnung
26 Dichtungselement
30 Getriebegehäusewanne
31 Getriebegehäusedeckel
32 Flanke
33 Nabe
34 Getrieberad
35 Vertiefung
36 Axiallager
37 Ausnehmung
38 Lagersitz
39 Federteller
40 Boden
41 Wandung
42 Durchgangsbohrung
43 Stirnseite
44 Freisparung
45 Ringwulstvorsprung
46 Ringnutvertiefung
47 Anschlagnocken
48 Tellerfeder
49 Tellerfeder
50 Tellerfeder
A2 Achse
α1,α2,αm Steigung
B Betätigungsrichtung
Z Drehachse
G Wendepunkt
ax axial
r radial
s1,sg Wandstärke
Ü Überstand
MMI Mensch-Maschine-Schnittstelle
MGU Motor-Getriebe-Einheit
ECU Elektronische Steuereinheit
M Elektromotor
LAN/WLAN Optional: (geschützte) Off-Board Schnittstelle nach extern zu einem Datennetzwerk

## Patentansprüche

1. Elektrischer Radbremsaktuator für Kraftfahrzeuge, aufweisend eine Elektromotor-Getriebeanordnung einschließlich Rot-Trans-Wandlerbaugruppe umfassend zumindest eine Mutter-Spindel-Anordnung (9) in einem Getriebegehäuse (8) wobei der Radbremsaktuator dazu dient, dass Bremsmittel (6a,b) eine Betätigungsbewegung in Richtung eines Bremsrotors aus führen können,
sowie mit einem Elastoelement (22) mit mindestens 2 Tellerfedern (48,49,50) das zwischen einem Löseendanschlag (20) der Mutter-Spindel-Anordnung (9) und dem Getriebegehäuse (8) oder einer Flanke (32) der Antriebsmutter (14) eingespannt ist, um eine automatische elektrische Elektromotorendabschaltung durch Motorstrombeobachtung mittels einer elektronischen Steuereinheit (ECU) zu ermöglichen, **dadurch gekennzeichnet, dass** das Elastoelement (22) zur Ausbildung einer gespreizten Kraft-Weg-Federkennlinie aus mehreren Federkennlinienteilstücken segmentiert zusammengesetzt vorgesehen ist.

2. Elektrischer Radbremsaktuator für Kraftfahrzeuge nach Anspruch 1, **dadurch gekennzeichnet, dass** die Kraft-Weg-Federkennlinie A - F im Wesentlichen über eine kontinuierliche Kurvenform verfügt, deren Krümmung einer ungeraden Funktion von wenigstens kubischer Ordnung, oder höherer Ordnung, entspricht.

3. Elektrischer Radbremsaktuator für Kraftfahrzeuge nach Anspruch 1 oder 2, **dadurch gekennzeichnet, dass** die Kraft-Weg-Federkennlinie A - F ein degressiv gekrümmtes Federkennlinienteilstück B-C mit einem progressiv gekrümmten Federkennlinienteilstück D-E verbindet.

4. Elektrischer Radbremsaktuator für Kraftfahrzeuge nach einem oder mehreren der Ansprüche 1-3, **dadurch gekennzeichnet, dass** die Kraft-Weg-Federkennlinie A - F ein im Wesentlichen linear gerichtetes Federkennlinienteilstück C - D einschließt, das im Wesentlichen konstant ist.

5. Elektrischer Radbremsaktuator für Kraftfahrzeuge nach den Ansprüchen 3 und 4, **dadurch gekennzeichnet, dass** das im Wesentlichen konstante Federkennlinienteilstück C - D zwischen dem degressiv gekrümmten Federkennlinienteilstück B - C und dem progressiv gekrümmten Federkennlinienteilstück D - E eingefügt ist.

6. Elektrischer Radbremsaktuator für Kraftfahrzeuge nach einem oder mehreren der Ansprüche 1-5, **dadurch gekennzeichnet, dass** die Kraft-Weg-Federkennlinie A - F über zwei linear gerichtete Federkennlinienstücke A - B; E - F mit im Wesentlichen konstante Steigungen **(α1, α2)** verfügt.

7. Elektrischer Radbremsaktuator für Kraftfahrzeuge nach Anspruch 6, **dadurch gekennzeichnet, dass** die Steigung **(α1)** des Federkennlinienteilstücks A - B kleiner oder gleich der Steigung **(α2)** des Federkennlinienteilstücks E - F ausgeführt ist.

8. Elektrischer Radbremsaktuator für Kraftfahrzeuge nach Anspruch 6 oder 7, **dadurch gekennzeichnet, dass** die Steigungsdaten mit **α2 ≥ α1 ≥ αm** ausgeführt sind, wobei **α1** die Steigung des Federkennlinienteilstücks A-B, **α2** die Steigung des Federkennlinienteilstücks E-F, und **αm** eine mittlere Steigung ist.

9. Elektrischer Radbremsaktuator für Kraftfahrzeuge nach den Ansprüchen 3 und 4, **dadurch gekennzeichnet, dass** die Kraft-Weg-Federkennlinie A-F, in dem weitgehend linear konstanten Federkennlinienteilstück C - D, über einen Wendepunkt G in der Krümmung zwischen dem degressiv gekrümmten Federkennlinienteilstück B - C und dem progressiv gekrümmten Federkennlinienteilstück D-E verfügt.

10. Elektrischer Radbremsaktuator für Kraftfahrzeuge nach einem oder mehreren der Ansprüche 1-9, **dadurch gekennzeichnet, dass** das Elastoelement (22) modular zusammengesetzt ist und als geschichtete Tellerfedersäule vorliegt, welche wenigstens eine vereinzelte Tellerfeder (50) gemeinsam mit einem, in Relation zu der einzelnen Tellerfeder (50) konträr, wechselsinnig arrangierten, Tellerfederpaket einschließt, und wobei das Tellerfederpaket mindestens zwei untereinander gleichsinnig aufgeschichtete Tellerfedern (48,49) umfasst.

11. Elektrischer Radbremsaktuator für Kraftfahrzeuge nach Anspruch 10, **dadurch gekennzeichnet, dass** das Tellerfederpaket über zwei identisch ausgebildete Tellerfedern (48,49) mit degressiver Federkennlinie verfügt, und wobei die Blockkraft des Tellerfederpakets kleiner als die Blockkraft des Elastoelementes (22) ausgelegt ist.

12. Elektrischer Radbremsaktuator für Kraftfahrzeuge nach Anspruch 10, **dadurch gekennzeichnet, dass** die Einzeltellerfeder (50) ein linear und/oder progressiv ausgelegtes Federkennlininienteilstück beiträgt, und wobei die Blockkraft der Einzeltellerfeder (50) mit einer maximal ausgelegten Blockkraft des Elastoelements (22) übereinstimmt.

13. Elektrischer Radbremsaktuator für Kraftfahrzeuge nach Anspruch 10, **dadurch gekennzeichnet, dass** das Tellerfederpaket über zwei identisch ausgebildete Tellerfedern (48,49) verfügt, die ein linear und/oder progressiv ausgelegtes Federkennlinienteilstück beitragen, und wobei eine Tellerfeder (50) ein linear und/oder degressiv gekrümmtes Federkennlinienteilstück beiträgt.

14. Elektrischer Radbremsaktuator für Kraftfahrzeuge nach Anspruch 10, **dadurch gekennzeichnet, dass** die Blockkraft des Tellerfederpaketes mit einer maximal ausgelegten Blockkraft des Elastoelementes (22) übereinstimmt.

15. Elektrischer Radbremsaktuator für Kraftfahrzeuge nach einem oder mehreren der Ansprüche 1-14, **dadurch gekennzeichnet, dass** alle Tellerfedern (48,49,50) des Elastoelementes (22) über identische Außendurchmesser verfügen, und wobei die Tellerfeder (50) im Vergleich mit den weiteren Tellerfedern (48,49) der Tellerfederbaugruppe über einen vergrößerten Innendurchmesser verfügt.

16. Elektrischer Radbremsaktuator für Kraftfahrzeuge nach einem oder mehreren der Ansprüche 1-15, **dadurch gekennzeichnet, dass** eine Wandstärke (s1) einer Tellerfeder (50) im Wesentlichen mit einer summarischen Wandstärke (sg) einer konträr dazu arrangierten Tellerfederbaugruppe, umfassend gleichsinnig geschichtete Tellerfedern (48,49), übereinstimmt.

17. Elektrischer Radbremsaktuator für Kraftfahrzeuge nach einem oder mehreren der Ansprüche 1-16, **dadurch gekennzeichnet, dass** alle Tellerfedern (48,49,50) des Elastoelementes aus identischem, nichtrostenden, Federstahlblechwerkstoff ausgebildet sind.

## Claims

1. Electrical wheel brake actuator for motor vehicles, having an electric motor-gear assembly with a rotation-translation converter assembly that comprises at least one nut-spindle arrangement (9) in a gear housing (8), wherein the wheel brake actuator is designed such that brake means (6a, b) can execute an actuating movement in the direction of a brake rotor, and with an elastic element (22) which has at least two disc springs (48, 49, 50) and is clamped between a release end stop (20) of the nut-spindle arrangement (9) and the gear housing (9) or a flank (32) of the drive nut (14) in order to allow an automatic electrical final switching off of the electric motor by motor current monitoring by means of an electronic control unit (ECU), **characterized in that** the elastic element (22) is assembled in segmented form from a plurality of spring curve portions in order to form an expanded force-travel spring curve.

2. Electrical wheel brake actuator for motor vehicles according to Claim 1, **characterized in that** the force-travel spring curve A-F substantially has a continuous curve form, the curvature of which corresponds to an uneven function of at least the cubic order or higher order.

3. Electrical wheel brake actuator for motor vehicles according to Claim 1 or 2, **characterized in that** the force-travel spring curve A-F connects a degressively curved spring curve portion B-C with a progressively curved spring curve portion D-E.

4. Electrical wheel brake actuator for motor vehicles according to one or more of Claims 1 to 3, **characterized in that** the force-travel spring curve A-F includes a substantially linearly oriented spring curve portion C-D which is substantially constant.

5. Electrical wheel brake actuator for motor vehicles according to Claims 3 and 4, **characterized in that** the substantially constant spring curve portion C-D is inserted between the degressively curved spring curve portion B-C and the progressively curved spring curve portion D-E.

6. Electrical wheel brake actuator for motor vehicles according to one or more of Claims 1 to 5, **characterized in that** the force-travel spring curve A-F has two linearly oriented spring curve portions A-B; E-F with substantially constant gradients **(α1, α2).**

7. Electrical wheel brake actuator for motor vehicles according to Claim 6, **characterized in that** the gradient **(α1)** of the spring curve portion A-B is less than or equal to the gradient **(α2)** of the spring curve portion E-F.

8. Electrical wheel brake actuator for motor vehicles according to Claim 6 or 7, **characterized in that** the gradient data are configured with **α2 ≥ α1 ≥ αm,** where **α1** is the gradient of the spring curve portion A-B, **α2** is the gradient of the spring curve portion E-F, and **αm** is a mean gradient.

9. Electrical wheel brake actuator for motor vehicles according to Claims 3 and 4, **characterized in that** the force-travel spring curve portion A-F, in the largely linearly constant spring curve portion C-D, has a reversal point G in the curvature between the degressively curved spring curve portion B-C and the progressively curved spring curve portion D-E.

10. Electrical wheel brake actuator for motor vehicles according to one or more of Claims 1 to 9, **characterized in that** the elastic element (22) is assembled modularly and is present as a layered disc spring column which includes at least one individual disc spring (50) together with a disc spring packet which is arranged alternately contrarily relative to the individual disc spring (50), and wherein the disc spring packet comprises at least two superposed disc springs (48, 49) facing in the same direction as each other.

11. Electrical wheel brake actuator for motor vehicles according to Claim 10, **characterized in that** the disc spring packet has two identically formed disc springs (48, 49) with a degressive spring curve, and wherein the block force of the disc spring packet is designed to be smaller than the block force of the elastic element (22).

12. Electrical wheel brake actuator for motor vehicles according to Claim 10, **characterized in that** the individual disc spring (50) contributes a linear and/or progressive spring curve portion, and wherein the block force of the individual disc spring (50) corresponds to a maximally rated block force of the elastic element (22).

13. Electrical wheel brake actuator for motor vehicles according to Claim 10, **characterized in that** the disc spring packet has two identically formed disc springs (48,49) which contribute a linear and/or progressive spring curve portion, and wherein a disc spring (50) contributes a linearly and/or degressively curved spring curve portion,

14. Electrical wheel brake actuator for motor vehicles according to Claim 10, **characterized in that** the block force of the disc spring packet corresponds to a maximally rated block force of the elastic element (22).

15. Electrical wheel brake actuator for motor vehicles according to one or more of Claims 1 to 14, **characterized in that** all disc springs (48, 49, 50) of the elastic element (22) have identical outer diameter, and wherein the disc spring (50) has a larger inner diameter than the further disc springs (48, 49) of the disc spring assembly.

16. Electrical wheel brake actuator for motor vehicles according to one or more of Claims 1 to 15, **characterized in that** a wall thickness (s1) of a disc spring (50) substantially corresponds to a summary wall thickness (sg) of a disc spring assembly arranged contrarily thereto and comprising superposed disc springs (48, 49) facing in the same direction.

17. Electrical wheel brake actuator for motor vehicles according to one or more of Claims 1 to 16, **characterized in that** all disc springs (48, 49, 50) of the elastic element are formed from identical stainless spring steel material.

## Revendications

1. Actionneur de frein de roue électrique pour véhicules automobiles, présentant un agencement de transmission de moteur électrique avec un sous-ensemble de convertisseur rotation/translation comprenant au moins un agencement vis/écrou (9) dans un carter de transmission (8), dans lequel l'actionneur de frein de roue sert à permettre à des moyens de freinage (6a, b) d'effectuer un mouvement d'actionnement en direction d'un rotor de frein,
et comprenant un élément élastique (22) pourvu d'au moins 2 ressorts à disques (48, 49, 50) et monté entre une butée de fin de course de desserrage (20) de l'agencement vis/écrou (9) et le carter de transmission (8) ou un flanc (32) de l'écrou d'entraînement (14) afin de permettre un déclenchement en fin de course électrique automatique du moteur électrique par observation du courant moteur au moyen d'une unité de commande électronique (ECU),
**caractérisé en ce que** l'élément élastique (22) est prévu pour réaliser une courbe caractéristique de ressort force/course étalée, composée de manière segmentée de plusieurs sections de courbe caractéristique de ressort.

2. Actionneur de frein de roue électrique pour véhicules automobiles selon la revendication 1, **caractérisé en ce que** la courbe caractéristique de ressort force/course A-F dispose substantiellement d'une forme de courbe continue dont la courbure correspond à une fonction impaire d'ordre au moins cubique ou d'ordre supérieur.

3. Actionneur de frein de roue électrique pour véhicules automobiles selon la revendication 1 ou 2, **caractérisé en ce que** la courbe caractéristique de ressort force/course A-F relie une section de courbe caractéristique de ressort B-C à courbure dégressive à une section de courbe caractéristique de ressort D-E à courbure progressive.

4. Actionneur de frein de roue électrique pour véhicules automobiles selon une ou plusieurs des revendications 1 à 3, **caractérisé en ce que** la courbe caractéristique de ressort force/course A-F inclut une section de courbe caractéristique de ressort C-D d'orientation substantiellement linéaire et qui est substantiellement constante.

5. Actionneur de frein de roue électrique pour véhicules automobiles selon les revendications 3 et 4, **caractérisé en ce que** la section de courbe caractéristique de ressort C-D substantiellement constante est insérée entre la section de courbe caractéristique de ressort B-C à courbure dégressive et la section de courbe caractéristique de ressort D-E à courbure progressive,

6. Actionneur de frein de roue électrique pour véhicules automobiles selon une ou plusieurs des revendications 1 à 5, **caractérisé en ce que** la courbe caractéristique de ressort force/course A-F dispose de deux sections de courbe caractéristique de ressort d'orientation linéaire A-B ; E-F ayant des pentes (α1, α2) substantiellement constantes.

7. Actionneur de frein de roue électrique pour véhicules automobiles selon la revendication 6, **caractérisé en ce que** la pente (α1) de la section de courbe caractéristique de ressort A-B est réalisée pour être inférieure ou égale à la pente (α2) de la section de courbe caractéristique de ressort E-F.

8. Actionneur de frein de roue électrique pour véhicules automobiles selon la revendication 6 ou 7, **caractérisé en ce que** les données de pente sont réalisées par α2 ≥ α1 ≥ αm, α1 étant la pente de la section de courbe caractéristique de ressort A-B, α2 étant la pente de la section de courbe caractéristique de ressort E-F, et αm étant une pente moyenne.

9. Actionneur de frein de roue électrique pour véhicules automobiles selon les revendications 3 et 4, **caractérisé en ce que** la courbe caractéristique de ressort force/course A-F, dans la section de courbe caractéristique de ressort substantiellement constante de façon linéaire, C-D, dispose d'un point d'inflexion G dans la courbure entre la section de courbe caractéristique de ressort B-C à courbure dégressive et la section de courbe caractéristique de ressort D-E à courbure progressive,

10. Actionneur de frein de roue électrique pour véhicules automobiles selon une ou plusieurs des revendications 1 à 9, **caractérisé en ce que** l'élément élastique (22) est composé de manière modulaire et existe sous forme de colonne de ressorts à disques empilés qui inclut au moins un ressort à disques isolé (50) conjointement avec un bloc de ressorts à disques agencé à l'opposé, en sens contraire par rapport au ressort à disques isolé (50), et dans lequel le bloc de ressorts à disques comprend au moins deux ressorts à disques (48, 49) empilés dans le même sens entre eux.

11. Actionneur de frein de roue électrique pour véhicules automobiles selon la revendication 10, **caractérisé en ce que** le bloc de ressorts à disques dispose de deux ressorts à disques (48, 49) réalisés de manière identique avec une courbe caractéristique de ressort dégressive, et dans lequel la force de bloc du bloc de ressorts à disques est configurée pour être inférieure à la force de bloc de l'élément élastique (22),

12. Actionneur de frein de roue électrique pour véhicules automobiles selon la revendication 10, **caractérisé en ce que** le ressort à disques individuel (50) contribue une section de courbe caractéristique de ressort configurée de manière linéaire et/ou progressive, et dans lequel la force de bloc du ressort à disques individuel (50) coïncide avec une force de bloc de l'élément élastique (22), configurée au maximum.

13. Actionneur de frein de roue électrique pour véhicules automobiles selon la revendication 10, **caractérisé en ce que** le bloc de ressorts à disques dispose de deux ressorts à disques (48, 49) réalisés de manière identique qui contribuent une section de courbe caractéristique de ressort configurée de manière linéaire et/ou progressive, et dans lequel un ressort à disques (50) contribue une section de courbe caractéristique de ressort à courbure linéaire et/ou dégressive.

14. Actionneur de frein de roue électrique pour véhicules automobiles selon la revendication 10, **caractérisé en ce que** la force de bloc du bloc de ressorts à disques coïncide avec une force de bloc de l'élément élastique (22), configurée au maximum.

15. Actionneur de frein de roue électrique pour véhicules automobiles selon une ou plusieurs des revendications 1 à 14, **caractérisé en ce que** tous les ressorts à disques (48, 49, 50) de l'élément élastomère (22) disposent de diamètres extérieurs identiques, et dans lequel le ressort à disques (50) dispose en comparaison avec les autres ressorts à disques (48, 49) du sous-ensemble de ressorts à disques d'un diamètre intérieur agrandi.

16. Actionneur de frein de roue électrique pour véhicules automobiles selon une ou plusieurs des revendications 1 à 15, **caractérisé en ce qu'**une épaisseur de paroi (s1) d'un ressort à disques (50) coïncide substantiellement avec une épaisseur de paroi totale (sg) d'un sous-ensemble de ressorts à disques agencé à l'opposé de celui-ci, comprenant des ressorts à disques (48, 49) empilés dans le même sens.

17. Actionneur de frein de roue électrique pour véhicules automobiles selon une ou plusieurs des revendications 1 à 16, **caractérisé en ce que** tous les ressorts à disques (48, 49, 50) de l'élément élastique sont réalisés dans le même matériau de tôle d'acier à ressort inoxydable.
